# DEMANDE DE BREVET EUROPEEN

(11) **EP 1 052 146 A1**
(43) Date de publication de la demande: **15.11.2000**
(21) Numéro de dépôt: 00401305.8
(22) Date de dépôt: 12.05.2000
(51) Int. Cl.: B60R 9/045

(54) **Dispositif de montage coulissant notamment pour barre de toit transversale**

(30) Priorité: 14.05.1999 FR 9906165
(71) Demandeur: Automaxi Industries, 35400 Saint-Malo (FR)
(72) Inventeur: Ringeard, Thierry, 35400 Saint Malo (FR)
(74) Mandataire: Bentz, Jean-Paul

(57) **Abrégé**

L'invention concerne un dispositif de montage amovible d'une barre transversale (1) sur un toit de véhicule (2), comprenant des moyens de fixation (4, 5) liés à la barre (1), un levier d'actionnement (6), et un rail (3) solidaire du toit (2) et dans lequel sont engagés les moyens de fixation (4, 5), le rail (3) présentant, en section transversale, un profil enveloppant formé d'une base (30) et de deux rabats latéraux (31, 32) définissant entre eux une fente longitudinale (33).

Selon l'invention, les moyens de fixation (4, 5) comprennent d'une part un pied (4) creux, solidaire de la barre (1) et plus large que la fente (33) et d'autre part un poussoir (5), mobile au moins en translation dans le pied (4) par rotation du levier (6), une extrémité active (51) du poussoir (5) pouvant ainsi être sélectivement appliquée contre la base (30) du profil du rail (3), ou éloignée de cette base (30).

## Description

La présente invention concerne, de façon générale, les fixations amovibles du type de celles qui sont notamment utilisées pour monter des barres porte-bagages sur le toit de véhicules automobiles.

Plus précisément, l'invention concerne un dispositif de montage amovible d'une pièce sur un support, ce dispositif comprenant un rail solidaire du support, des moyens de fixation liés à la pièce et rendus sélectivement opérationnels par actionnement, et des moyens d'actionnement, le rail présentant, en section transversale, un profil enveloppant dans lequel sont au moins partiellement engagés les moyens de fixation et qui est formé d'une base et de deux rabats latéraux définissant entre eux une fente longitudinale de largeur déterminée.

Des dispositifs de ce type ou de type voisin sont déjà connus dans l'art antérieur, comme en témoignent par exemple les documents de brevets FR 2 705 295, US 4 972 983, et FR 2 707 938.

Les moyens de fixation utilisés dans ces dispositifs relèvent essentiellement de trois principes : soit ces moyens de fixation comprennent un crochet, soit ils sont conçus pour pincer les rabats latéraux de la section transversale du rail, soit enfin ils sont conçus pour écarter ces rabats latéraux l'un de l'autre.

Ces solutions, bien que d'utilisation éventuellement agréable, sont néanmoins de réalisation relativement complexe et donc coûteuse et/ou de fiabilité perfectible.

La présente invention se situe dans ce contexte et a pour but de proposer un dispositif de montage amovible ayant des qualités d'utilisation au moins équivalentes, et de réalisation plus simple et/ou plus fiable.

A cette fin, le dispositif de l'invention, par ailleurs conforme à la définition qu'en donne le préambule ci-dessus, est essentiellement caractérisé en ce que les moyens de fixation comprennent un pied creux, solidaire de la pièce, et un poussoir, mobile au moins en translation dans le pied, une première extrémité du pied étant engagée dans le profil du rail et présentant une dimension transversale supérieure à la largeur de la fente, et en ce que les moyens d'actionnement comprennent un organe d'entraînement du poussoir, monté à rotation par rapport au pied et propre à adopter sélectivement une position angulaire de relâchement pour laquelle une extrémité active du poussoir est relativement proche de la première extrémité du pied et éloignée de la base du profil, et une position angulaire de serrage pour laquelle l'extrémité active du poussoir est relativement éloignée de la première extrémité du pied et appliquée contre la base du profil.

Dans un premier mode de réalisation possible de l'invention, le poussoir et le pied sont liés l'un à l'autre par une liaison vis-écrou, l'organe d'entraînement opérant un dévissage du poussoir hors du pied en passant de sa position de relâchement à sa position de serrage.

Dans d'autres modes de réalisation possibles de l'invention, les moyens d'actionnement peuvent comprendre une came montée à rotation sur le pied et présentant une surface externe excentrée appuyant sélectivement sur le poussoir, à l'encontre d'une force élastique de rappel.

En particulier, le poussoir peut alors présenter une partie médiane montée coulissante dans le pied, la surface externe de la came appuyant sélectivement sur une extrémité commandée du poussoir, distante de l'extrémité active de ce dernier.

L'organe d'entraînement peut consister en un levier, par exemple conformé pour s'intégrer dans la barre en position de serrage, ou en une poulie, en particulier dans le cas où la force d'entraînement est exercée à distance et transmise par un câble.

Pour obtenir, hors service, un meilleur glissement du poussoir dans le rail, il est possible de prévoir que le poussoir ou son extrémité active prenne la forme d'un sabot allongé, la force élastique de rappel du poussoir étant alors par exemple exercée par au moins un ressort agissant sur le sabot.

Comme il est dit précédemment, l'invention s'applique de façon privilégiée au cas où la pièce est une barre transversale porte-bagages et où le support est un toit de véhicule automobile.

D'autres caractéristiques et avantages de l'invention ressortiront clairement de la description qui en est faite ci-après, à titre indicatif et nullement limitatif, en référence aux dessins annexés, dans lesquels :

La figure 1 est une vue partielle en coupe, suivant un plan transversal au rail, d'un dispositif conforme à un premier mode de réalisation de l'invention.

La figure 2 est une vue partielle en coupe, suivant un plan longitudinal par rapport au rail, du dispositif illustré à la figure 1.

La figure 3 est une vue partielle en coupe, suivant un plan transversal au rail, d'un dispositif conforme à un second mode de réalisation de l'invention.

La figure 4 est une vue partielle en coupe, suivant un plan longitudinal par rapport au rail, du dispositif illustré à la figure 3.

La figure 5 est une vue partielle en coupe, suivant un plan transversal au rail, d'un dispositif conforme à un troisième mode de réalisation de l'invention.

La figure 6 est une vue partielle en coupe, suivant un plan longitudinal par rapport au rail, du dispositif illustré à la figure 5.

La présente invention concerne un dispositif de montage amovible d'une pièce, telle qu'une barre transversale 1 porte-bagages, sur un support tel qu'un toit 2 de véhicule automobile.

Ce dispositif comprend, de façon connue en soi, un rail 3 solidaire du toit 2, des moyens de fixation, tels que 4 et 5, liés à la barre 1 et rendus sélectivement opérationnels par actionnement, et des moyens d'actionnement tels que 6 et 7.

Le rail 3 est fixé au toit 2 parallèlement à la direction de progression du véhicule et présente, en section transversale, un profil enveloppant qui est formé d'une base 30 et de deux rabats latéraux 31, 32 définissant entre eux une fente longitudinale 33.

Selon l'invention, les moyens de fixation comprennent essentiellement un pied 4 et un poussoir 5.

Le pied 4, qui est creux et solidaire de la barre 1, est engagé par une de ses extrémités 41 dans le profil du rail 3.

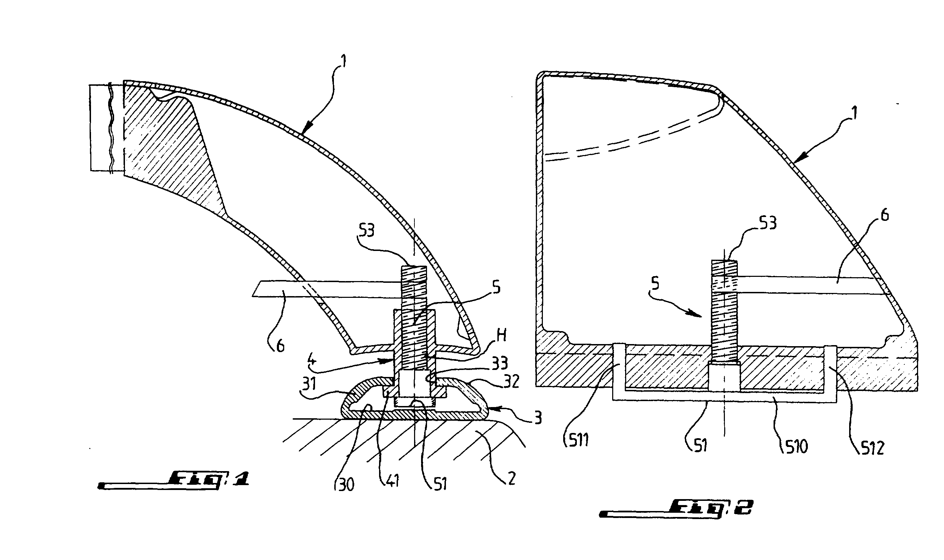

Comme le montrent les figures 1, 3, et 5, l'extrémité 41 du pied 4 présente une dimension transversale supérieure à la largeur de la fente 33, de sorte que ce pied ne peut être engagé dans le profil du rail ou s'en échapper que par coulissement suivant la direction longitudinale du rail.

Le poussoir 5 est monté dans le pied 4 de manière à pouvoir se déplacer dans ce dernier, au moins en translation, suivant une direction perpendiculaire à la base 30 du rail.

Les moyens d'actionnement comprennent au moins un organe d'entraînement du poussoir, tel qu'un levier 6, monté à rotation par rapport au pied 4.

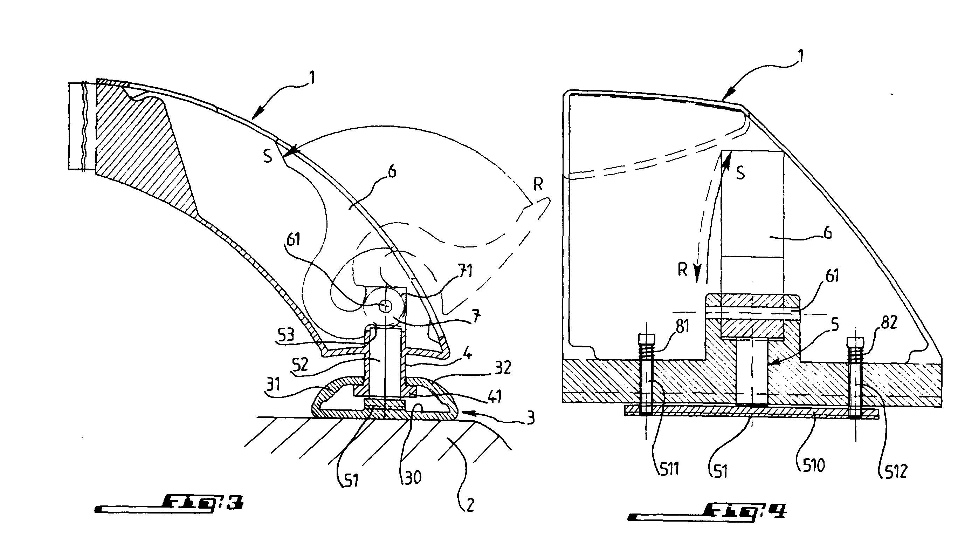

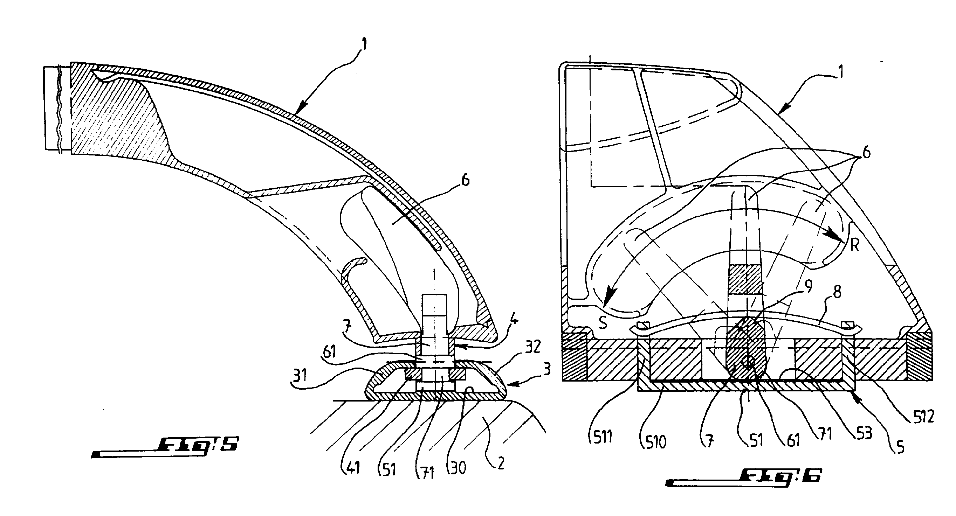

Ce levier 6 peut être actionné à la main pour prendre, au choix, une position angulaire de relâchement R telle qu'illustrée par exemple à la figure 1 en référence au premier mode de réalisation de l'invention, et une position de serrage S telle qu'illustrée par les figures 3 et 5 en référence à deux autres modes de réalisation de l'invention.

Lorsque le levier 6 est dans sa position de relâchement R, l'extrémité active 51 du poussoir 5 est relativement proche de l'extrémité élargie 41 du pied 4, et donc éloignée de la base 30 du profil, de sorte que le pied 4, et avec lui la barre 1, peuvent coulisser le long du rail 3.

Au contraire, lorsque le levier 6 est dans sa position angulaire de serrage S, l'extrémité active 51 du poussoir est appliquée contre la base 30 du profil, de sorte que ni le pied 4, ni par conséquent la barre 1, ne peuvent coulisser le long du rail 3.

Selon le premier mode de réalisation, illustré aux figures 1 et 2, le poussoir 5 et le pied 4 sont liés l'un à l'autre par une liaison vis-écrou ou rampe hélocoïdale H, le poussoir 5 portant un filetage, et le pied 4 un taraudage.

Par ailleurs, le levier 6 est fixé à l'extrémité commandée 53 du poussoir 5, perpendiculairement à ce dernier, de sorte qu'une rotation de ce levier de sa position de relâchement R à sa position de serrage S opère un dévissage du poussoir 5 hors du pied 4 jusqu'à l'appui ferme de l'extrémité active 51 du poussoir 5 contre la base 30 du rail, ce dont résulte le blocage de la barre 1 sur le toit 2.

Selon d'autres modes de réalisation de l'invention, par exemple tels que ceux illustrés au figures 3 à 6, les moyens d'actionnement peuvent comprendre une came 7 solidaire en rotation du levier 6 et présentant une surface externe 71 excentrée, par exemple directement formée à une extrémité du levier 6, et appuyant sélectivement sur le poussoir 5 à l'encontre d'une force élastique de rappel exercée par un ou plusieurs ressorts tels que 8, 81 et 82.

Dans le mode de réalisation des figures 3 et 4, le poussoir 5 présente une partie médiane 52 montée coulissante dans le pied 4, et la surface externe 71 de la came 7 appuie sur une extrémité commandée 53 du poussoir, distante de l'extrémité active 51.

Dans ce cas, le levier 6, qui est alors monté à rotation sur le pied 4 autour d'un axe 61 parallèle au rail 3, peut alors être conformé pour s'intégrer dans la barre 1 en position de serrage comme le montre la figure 3.

Comme le montrent les figures 1 à 4, l'extrémité active 51 du poussoir 5 peut prendre la forme d'un sabot allongé 510 permettant notamment un meilleur coulissement du poussoir dans le rail au montage et au démontage, ce sabot étant monté coulissant dans le pied 4 grâce à des colonnettes 511, 512.

Néanmoins, le poussoir peut ausi être intégralement constitué par un sabot allongé 510, comme le montrent les figures 5 et 6, qui illustrent un mode de réalisation dans lequel le levier 6 pivote autour d'un axe 61 parallèle à la base 30 du rail 3 et perpendiculaire à la longueur de ce dernier, et dans lequel la surface externe 71 de la came 7 appuie directement sur une face commandée 53 du sabot 510.

Dans ce cas, le sabot, également monté coulissant dans le pied 4 grâce à des colonnettes 511, 512, présente par exemple une seconde came 9 sur laquelle prend appui le ressort 8 destiné à rappeler le sabot 510 à distance de la base 30 du rail 3.

Dans tous les modes de réalisation, il peut être utile de faire en sorte que la force à appliquer à l'organe d'entraînement, tel que le levier 6, passe par un maximum au voisinage de la position de serrage S de cet organe dans son mouvement de sa position de relâchement R à sa position de serrage S.

Cette disposition, connue sous le nom "d'effet genouillère" ou de "point mort dépassé" peut être par exemple mise en oeuvre en adaptant la forme de la rampe hélicoïdale H, de la came 7, ou de la came 9, et permet d'éviter tout desserrage intempestif.

## Revendications

1. Dispositif de montage amovible d'une pièce (1) sur un support (2), comprenant un rail (3) solidaire du support (2), des moyens de fixation (4, 5) liés à la pièce (1) et rendus sélectivement opérationnels par actionnement, et des moyens d'actionnement (6, 7), le rail (3) présentant, en section transversale, un profil enveloppant dans lequel sont au moins partiellement engagés les moyens de fixation (4, 5) et qui est formé d'une base (30) et de deux rabats latéraux (31, 32) définissant entre eux une fente longitudinale (33) de largeur déterminée, caractérisé en ce que les moyens de fixation (4, 5) comprennent un pied (4), creux, solidaire de la pièce (1) et un poussoir (5), mobile au moins en translation dans le pied (4), une première extrémité (41) du pied (4) étant engagée dans le profil du rail (3) et présentant une dimension transversale supérieure à la largeur de la fente (33), et en ce que les moyens d'actionnement (6, 7) comprennent un organe d'entraînement (6) du poussoir, monté à rotation par rapport au pied (4) et propre à adopter sélectivement une position angulaire de relâchement (R) pour laquelle une extrémité active (51) du poussoir (5) est relativement proche de la première extrémité (41) du pied et éloignée de la base (30) du profil, et une position angulaire de serrage (S) pour laquelle l'extrémité active (51) du poussoir est relativement éloignée de la première extrémité (41) du pied et appliquée contre la base (30) du profil.

2. Dispositif de montage amovible suivant la revendication 1, caractérisé en ce que le poussoir (5) et le pied (4) sont liés l'un à l'autre par une liaison vis-écrou (H), l'organe d'entraînement (6) opérant un dévissage du poussoir (5) hors du pied (4) en passant de sa position de relâchement (R) à sa position de serrage (S) .

3. Dispositif de montage amovible suivant la revendication 1, caractérisé en ce que les moyens d'actionnement (6, 7) comprennent une came (7) montée à rotation sur le pied (4) et présentant une surface externe (71) excentrée appuyant sélectivement sur le poussoir (5), à l'encontre d'une force élastique de rappel.

4. Dispositif de montage amovible suivant la revendication 1, caractérisé en ce que le poussoir (5) présente une partie médiane (52) montée coulissante dans le pied (4) et en ce que la surface externe (71) de la came (7) appuie sélectivement sur une extrémité commandée (53) du poussoir, distante de l'extrémité active (51).

5. Dispositif de montage amovible suivant l'une quelconque des revendications précédentes, caractérisé en ce que l'organe d'entraînement (6) est un levier.

6. Dispositif de montage amovible suivant l'une quelconque des revendications précédentes, caractérisé en ce que le poussoir (5), ou son extrémité active (51), prend la forme d'un sabot (510) allongé.

7. Dispositif de montage amovible suivant l'une quelconque des revendications précédentes combinée aux revendications 3 et 6, caractérisé en ce que la force élastique de rappel est exercée par au moins un ressort (8, 81, 82) agissant sur le sabot (510).

8. Dispositif de montage amovible suivant l'une quelconque des revendications précédentes, caractérisé en ce que la pièce (1) est une barre de toit transversale.

9. Dispositif de montage amovible suivant l'une quelconque des revendications précédentes, caractérisé en ce que le support (2) est un toit de véhicule automobile.

10. Dispositif de montage amovible suivant les revendications 3, 5 et 8, caractérisé en ce que le levier (6) est conformé pour s'intégrer dans la barre (1) en position de serrage.
